# EUROPEAN PATENT APPLICATION

(11) **EP 4 509 540 A1**
(43) Date of publication of application: **19.02.2025**
(21) Application number: 23191719.6
(22) Date of filing: 16.08.2023
(51) Int. Cl.: C08G 18/08, C08G 18/12, C08G 18/28, C08G 18/32, C08G 18/40, C08G 18/44, C08G 18/48, C08G 18/73, C08G 18/75, C09D 175/06, C09D 175/08, C09D 175/12

(54) **A SOLVENT-FREE POLYURETHANE DISPERSION BASED ON POLYTRIMETHYLENE ETHER GLYCOL**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to polyurethanes and polyurethane dispersions based on polyethers obtainable from renewable sources, particularly biomass.

## Description

The present invention relates to polyurethanes and polyurethane dispersions based on polyethers obtainable from renewable sources, particularly biomass.

Polyurethane dispersions are widely used in coating applications. As compared to solvent-based polyurethane coating compositions they are more sustainable because they do not contain organic solvents which either evaporate and are released into the environment or must be burned in order to prevent the release. However, the polyurethanes themselves are currently to a large part based on raw materials derived from fossil sources, especially oil. Thus, there is a need to develop polyurethanes which themselves are based on renewable raw materials such as biomass. In order to supplant the polyurethanes currently in use these new polyurethanes should be suitable for making coatings with similar or improved properties.

Polyurethanes are obtained by reacting a polyol component with a polyurethane component. The polyol component may be a polyester polyol, a polycarbonate polyol or a polyether polyol. 1,3-propanediol may be obtained by microbial fermentation from biomass and reacted to polytrimethylene ether glycol (PO3G). US 2008/0039582 describes a polyurethane dispersion comprising this compound as polyol. The polyurethane dispersions according to US 2008/0039582 contained residual concentrations of 1-methyl-2-pyrrolidinone, an organic solvent. Moreover, resistance against certain chemicals left room for improvement.

Therefore, the problem solved by the present invention could be defined as providing solvent-free polyurethane dispersions which can be used to produce polyurethane coatings with a high degree of chemical resistance. This problem is solved by the embodiments defined by the claims and in this description below.

In a first embodiment, the present invention relates to a polyurethane obtained or obtainable by reacting
a) 25 to 50 wt.-% of at least one polytrimethylene ether glycol (PO3G) having a number-average molecular weight between 400 and 4,000 g/mol;
b) 20 to 25 wt.-% of at least one polycarbonate polyol or polycarbonate polyester polyol;
c) 10 to 30 wt.-% of at least one aliphatic polyisocyanate;
d) 0.5 to 2.5 wt.-% of at least one potentially ionic hydrophilizing agent; and
e) 1 to 3 wt.-% at least one monofunctional hydrophilic polyether;
wherein percentages are based on the total mass of the polyurethane.

The term "polytrimethylene ether glycol" preferably refers to a compound defined by formula (I) below:

HO[CH₂CH₂CH₂O]ₙH (I)

Wherein in n stand for an integer between 424 and 3962.

It is preferably derived from 1,3-propanediol by polycondensation. The person skilled in the art is aware that compounds used for technical purposes may not be absolutely pure. Therefore, the term PO3G also refers to compounds deviating from the compound defined by general formula (I) due to the presence of other diols or triols in the reaction mixture provided that at least 90 wt.-%, preferably at least 95 wt.-%, more preferably at least 98 wt.-% and most preferably at least 99.5 wt.-% of the molecule are derived from 1,3-propanediol.

In principle, all polycarbonate and polycarbonate polyester polyols common in the field of polyurethane chemistry may be used. Preferred polycarbonate and polycarbonate polyester polyols have a number average molecular weight between 1000 and 3000 g/mol.

Preferred polycarbonate polyols are obtained by the reaction of diols and aryl carbonates, or diols and alkyl carbonates or diols and mixtures of aryl and alkyl carbonates. A preferred aryl carbonate is diphenyl carbonate. A preferred alkyl carbonate is dimethyl carbonate. Preferably, the diol is selected from the group consisting of 1,3-propanediol, 1,4-butanediol, 1,5-pentanediol, 1,6-hexanediol, 3-methyl-1,5-pentanediol and 2,2-dimethyl-1,3-propanediol. A preferred polycarbonate polyol is obtained or obtainable from the reaction of dimethyl carbonate and 1,6-hexanediol. Preferred polycarbonate polyester polyols are copolymers of polycaprolactone and polycarbonate obtained or obtainable from the reaction of dimethyl carbonate and 1,6-hexanediol.

The term "aliphatic polyisocyanate" refers to any compound having at least two isocyanate groups linked to sp³-hybridized carbon atoms. It is to be understood that this definition includes compounds, wherein the sp³-hybridized carbon atom is linked to an aromatic ring.

When general reference is made in this application to "polyisocyanates", this means monomeric and/or oligomeric polyisocyanates alike. For understanding many aspects of the invention, however, it is important to distinguish between monomeric diisocyanates and oligomeric polyisocyanates. When reference is made here to "oligomeric polyisocyanates", this means polyisocyanates formed from at least two monomeric diisocyanate molecules, i.e. compounds that constitute or contain a reaction product formed from at least two monomeric diisocyanate molecules.

For example, hexamethylene diisocyanate (HDI) is a "monomeric diisocyanate" since it contains two isocyanate groups and is not a reaction product of at least two polyisocyanate molecules:

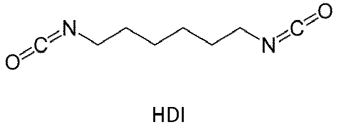

Reaction products which are formed from at least two HDI molecules and still have at least two isocyanate groups, by contrast, are "oligomeric polyisocyanates" within the context of the invention. Representatives of such "oligomeric polyisocyanates" are, proceeding from monomeric HDI, for example, HDI isocyanurate and HDI biuret, each of which are formed from three monomeric HDI units:

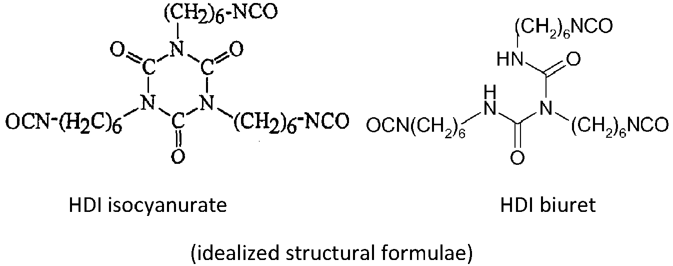

In the context of the present invention both monomeric as well as oligomeric isocyanates are equally useful. However, in a preferred embodiment of the present invention at least one oligomeric polyisocyanate is used.

Preferred aliphatic diisocyanates which can be used as such or as basis for the manufacture of oligomeric polyisocyanates suitable for use in the present invention are 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diiisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), 1,3- and 1,4-bis(isocyanatomethyl)cyclohexane, bis(isocyanatomethyl)norbornane (NBDI) and 4,4'-diisocyanato-3,3'-dimethyldicyclohexylmethane. Particularly preferred are hexamethylene diisocyanate, pentamethylene diisocyanate, isophorone diisocyanate and 4,4'-diisocyanatodicyclohexylmethane.

Cationically, anionically or nonionically dispersing compounds are those which contain, for example, sulphonium, ammonium, phosphonium, carboxylate, sulphonate, phosphonate groups or the groups which can be converted to the aforementioned groups by salt formation (potentially ionic groups) or polyether groups and can be incorporated into the macromolecules via isocyanate-reactive groups present. The neutralizing agents needed for salt formation may be added either in a stoichiometric amount or in deficiency in relation to the salt-forming group. To create anionic groups, organic bases such as tertiary amines or inorganic bases such as alkali metal hydroxides or ammonia are added. Preference is given here to using tertiary amines such as triethylamine, triethanolamine or dimethylethanolamine. Preferred suitable isocyanate-reactive groups are hydroxyl and amine groups.

The potentially ionic hydrophilizing agent may be a potentially anionic or a potentially cationic compound. Such compounds preferably have carboxyl or carboxylate and/or sulphonate groups and/or ammonium groups. Preferred potentially ionic compounds are mono- and dihydroxycarboxylic acids, dihydroxydicarboxylic acids, mono- and diaminocarboxylic acids, mono- and dihydroxysulphonic acids, mono- and diaminosulphonic acids and mono- and dihydroxyphosphonic acids or mono- and diaminophosphonic acids and salts thereof, such as dimethylolpropionic acid, dimethylolbutyric acid, hydroxypivalic acid, N-(2-aminoethyl)alanine, 2-(2-aminoethylamino)ethanesulphonic acid, ethylene-diaminepropyl- or -butylsulphonic acid, propylene-1,2- or 1,3-diamineethylsulphonic acid, malic acid, citric acid, glycolic acid, lactic acid, glycine, alanine, taurine, lysine, 3,5-diaminobenzoic acid, an addition product of IPDI and acrylic acid (EP-A 0 916 647, example 1) and the alkali metal and/or ammonium salts thereof; the adduct of sodium bisulphite onto but-2-ene-1,4-diol, polyethersulphonate, the propoxylated adduct of but-2-enediol and NaHSO₃, described, for example, in DE-A 2 446 440 (page 5-9, formula I-III) and units that can be converted to cationic groups, such as N-methyldiethanolamine, as hydrophilic formation components.

Particularly preferred compounds are diamino sulphonate and dimethylolpropionic acid.

The term "monofunctional hydrophilic polyether" refers to any polyether compound having one hydroxyl group or one amino group and hydrophilic properties. Preferred are polyoxyalkylene ethers containing a proportion of 30% by weight to 100% by weight of units derived from ethylene oxide. Preferred molecules have a statistical average of 5 to 70 and preferably 7 to 55 alkylene oxide units per molecule, as obtainable in a manner known per se by alkoxylation of suitable starter molecules.

In another embodiment, the present invention relates to an aqueous polyurethane dispersion comprising the polyurethane of the present invention.

It is preferred that the solid body in the dispersion consists to at least 50 wt.-%, preferably at least 75 wt.-% and most preferably at least 90 wt.-% of the polyurethane of the present invention, based in each case on the total mass of the solid body. In a particular preferred embodiment of the present invention, the solid body of the dispersion consists of the polyurethane of the present invention.

In another preferred embodiment of the present invention the acrylate content of the solid body does not exceed 10 wt.-%, preferably 5 wt.-% and most preferably 1 wt.-%.

In yet another preferred embodiment, the polyurethane dispersion has a content of organic solvents not exceeding 1.0 wt.-% based on the total mass of the dispersion.

In another embodiment, the present invention relates to an article coated with the polyurethane of the present invention. The article is preferably selected from the group consisting of synthetic leather base, fabric, yarn, paper and film.

In yet another preferred embodiment, the present invention relates to a foam or sheet made of the polyurethane of the present invention.

In another embodiment the present invention relates to a method comprising the steps of

### Method

In another embodiment the present invention relates to a method comprising the steps of
a) Mixing at least one polytrimethylene etherglycol having a number-average molecular weight between 400 and 4,000 g/mol, at least one polycarbonate polyol or polycarbonate polyester polyol, at least one aliphatic polyisocyanate, at least one monofunctional hydrophilic polyether and optionally at least one potentially ionic hydrophilizing agent;
b) Reacting the mixture obtained in method step a) to form a polyurethane;
c) Adding acetone to dissolve the polyurethane before, during or after step b), but before method steps d) and e);
d) Optionally adjusting the pH of the mixture so that the potentially ionic hydrophilizing agent - if present - is converted into its ionic form;
e) Reacting the polyurethane obtained in method step b), polyurethane solution obtained in method step c) or neutralized polyurethane obtained in method step d) with amine functional small molecules (molecular weight between 60 and 400 g/mol) to form a polyurethane-urea; the said amine functional small molecules further contains an anionic compound, preferred an amino functional sulphonate or carboxylate; the said amino functional small molecules can be dissolved in acetone or water before adding;
f) Adding water to the mixture obtained in method step d) or adding the mixture obtained in method step d) to water; and
g) Removing the acetone by distillation so that an aqueous polyurethane dispersion is obtained.

The definitions of the components of the polyurethane given above in this description also apply to this embodiment. It is preferred to use the components in the mass ratios set out above in this application.

Optional method step d) is preferred if potentially ionic hydrophilizing agents are used.

While the reaction usually proceeds without the addition of an urethanization catalyst, it is possible to use any catalyst known in the art which promotes the formation of urethane bonds from isocyanate groups and hydroxyl groups.

Method step b) is preferably at a temperature between 60 °C and °150 C, more preferably 80 °C and °130 C.

The amount of acetone added in method step c) is preferably between 15 and 70 wt.-% based on the combined mass of the components recited in method step a) and acetone.

The amount of water added in method step f) is preferably between 30 and 65 wt.-% based on the combined mass of the components recited in method step a), method step e) and water.

The following examples are merely intended to illustrate the invention. They shall not limit the scope of the claims in any way.

### Examples

### Raw materials and agents

| | |
|---|---|
| Velvetol H 1000 | Poly-1,3-propylenediol polyol, functionality 2, Mn=1000g/mol, OH number 112 mgKOH/g, commercially available from Allessa AG |
| Velvetol H 2000: | Poly-1,3-propylenediol polyol, functionality 2, Mn=2000g/mol, OH number 56 mgKOH/g, commercially available from Allessa AG |
| Desmophen C 2202: | Polycarbonate polyol, functionality 2, Mn=2000g/mol, OH number 56 mgKOH/g, commercially available from Covestro AG |
| Desmophen C 1200: | Polycarbonate polyester copolymer polyol, functionality 2, Mn=2000g/mol, OH number 56 mgKOH/g, commercially available from Covestro AG |
| PTHF2000: | Polytetrahydrofuran polyol, functionality 2, Mn=2000g/mol, OH number 56 mgKOH/g, commercially available from BASF AG |
| PTHF1000: | Polytetrahydrofuran polyol, functionality 2, Mn=1000g/mol, OH number 112 mgKOH/g, commercially available from BASF AG |
| Desmodur^{®} H : | 1,6- hexamethylene diisocyanate, commercially available from Covestro AG |
| Desmodur^{®} I: | Isophorone diisocyanate, commercially available from Covestro AG. |
| Desmodur^{®} VP PU 1806: | 4,4'-diphenylmethane diisocyanate, commercially available from Covestro AG |
| TMXDI: | α,α,α',α'-tetramethyl-1,3-xylylene diisocyanate, commercially available from Allnex AG |
| Polyether LB 25: | Monofunctional non-ionic hydrophilizing agent, polyether polyol based on Polyethylene oxide/propylene oxide, Mn=2250g/mol, OH number 25 mgKOH/g, available from Covestro AG |
| AAS: | Sodium diaminosulfonate, NH₂-CH₂CH₂-NH-CH₂CH₂-SO₃Na, 49 wt-% concentration aqueous solution, available from Covestro AG |
| KV1386: | N-(2-aminoethyl)- β -Alanine sodium, 40 wt-% concentration aqueous solution, available from Covestro AG |
| DMPA: | 2,2-Dimethylolpropionic acid, potential anionic hydrophilizing agent, commercially available from Aldrich chemical agent company. |
| TMP: | Trimethylolpropane, commercially available from Aldrich chemical agent company |
| BDO: | 1,4-butanediol, available from Covestro AG. |
| TEA: | Triethylamine, available from Covestro AG. |
| DMEA: | Dimethylethanolamine, available from Covestro AG |
| IPDA: | Isophorone diamine, available from Covestro AG. |
| EDA: | Ethylenediamine, available from Covestro AG |
| HEEDA: | 2-(2-aminoethoxy) ethanol, available from Covestro AG |
| DEA: | Diethanolamine, available from Covestro AG |

### Waterborne polyurethane dispersion synthesis

### Example 1

108.2 g of Velvetol H 2000, 37.7 g of Velvetol H 1000, 161.2 g of Desmophen C 2202 and 10.8 g of Polyester LB 25 were mixed and dehydrated at 110 °C and 100 mbar for 1 hour. 1.8 g of TMP were then added and the mixture was cooled while stirring. 48.5 g Desmodur^{®} I and 36.7 g Desmodur^{®} H were added at 60 °C. The resulting mixture was stirred at 115 °C until the isocyanate content reached 5.0 wt-%. The reaction product was dissolved in 803 g acetone and cooled to 50 °C. 3.1 g HEEDA and 7.5 g AAS solution in 48.2 g water were added and the mixture was stirred at 270 rpm for 30 minutes. 17.2 g of IPDA solution in 87.1g of water were added and the mixture was stirred at 270 rpm for 10 minutes. Another 211 g of water were added to disperse the mixture. The acetone was then removed by distillation to obtain a waterborne polyurethane dispersion with a solid content of 56 wt.-%.

### Example 2

75.4 g of Velvetol H 2000, 12.0 g of Velvetol H 1000, 125.5 g of Desmophen C 2202 and 5.8 g of Polyester LB 25 were mixed and dehydrated at 110 °C and 100 mbar for 1 hour. 1.0 g of TM P were added and the mixture was cooled while stirring. 62.9 g Desmodur^{®} I were added at 60 °C. The mixture was stirred at 115 °C until the isocyanate content reached 4.7 wt-%. The reaction product was dissolved in 522 g acetone and cooled to 50 °C. 2.0 g HEEDA and 6.6 g KV1386 solution in 31.4 g water were added and the mixture was stirred at 270 rpm for 30 minutes. 11.2 g of IPDA solution in 56.2 g of water were added and the mixture was stirred at 270 rpm for 10 minutes. Another 143 g of water were added to disperse the mixture. The acetone was then removed by distillation to obtain waterborne polyurethane dispersion with a solid content of 55 wt.-%.

### Example 3

25.0 g of Velvetol H 2000, 37.5 g of Velvetol H 1000, 142.5 g of Desmophen C 2202 and 14.0 g of Polyester LB 25 were mixed and dehydrated at 110 °C and 100 mbar for 1 hour. 1.9 g of TM P were added and the mixture was cooled while stirring. 60.5 g Desmodur^{®} I and 45.8 g Desmodur^{®} H were added at 60 °C. The mixture was stirred at 115 °C until the isocyanate content reached 4.8 wt-%. The reaction product was dissolved in 1003 g acetone and cooled to 50 °C. 3.9 g HEEDA and 11.6 g AAS solution in 48.2 g water were added and the mixture was stirred at 270 rpm for 30 minutes. 21.5 g of IPDA solution in 108 g of water were added and the mixture was stirred at 270 rpm for 10 minutes. Another 154 g of water were aded to disperse the mixture. The acetone was then removed by distillation to obtain waterborne polyurethane dispersion with a solid content of 55 wt.-%.

### Example 4

4.7g of Velvetol H 2000, 74.7g of Velvetol H 1000, 107.1g of Desmophen C 2202 and 9.7g of Polyester LB 25 were mixed and dehydrated at 110 °C and 100 mbar for 1 hour. 1.6 g of TMP were added and the mixture was cooled while stirring. 65.9 g Desmodur^{®} H were added at 60 °C. The mixture was stirred at 115 °C until the isocyanate content reached 5.2 wt-%. The reaction product was then dissolved in 722 g acetone and cooled to 50 °C. 2.8 g HEEDA and 6.7 g AAS solution in 48.2 g water were added and the mixture was stirred at 270 rpm for 30 minutes. 15.5 g of IPDA solution in 77.8 g of water were added and the mixture was stirred at 270 rpm for 10 minutes. Another 154 g of water to disperse the mixture. The acetone was then removed by distillation to obtain waterborne polyurethane dispersion with a solid content of 55 wt.-%.

### Example 5

105.0 g of Velvetol H 2000, 105.0 g of Desmophen C 2202 and 6.5 g of Polyester LB 25 were mixed and dehydrated at 110 °C and 100 mbar for 1 hour. 1.1 g of TMP were added and the mixture was cooled while stirring. 29.0 g Desmodur^{®} I and 22.0 g Desmodur^{®} H were added at 60 °C. The mixture was stirred at 115 °C until the isocyanate content reached 4.5 wt-%. The reaction product was then dissolved in 481 g acetone and cooled to 50 °C. 1.9 g HEEDA and 4.5 g AAS solution in 48.2 g water were added and the mixture was stirred at 270 rpm for 30 minutes. 10.3 g of IPDA solution in 51.8 g of water were added and the mixture was stirred at 270 rpm for 10 minutes. Another 141 g of water were added to disperse the mixture. The acetone was then removed by distillation to obtain waterborne polyurethane dispersion with a solid content of 56 wt.-%.

### Example 6

119.0g of Velvetol H 1000, 119.0 g of Desmophen C 2202 and 10.8 g of Polyester LB 25 were mixed and dehydrated at 110 °C and 100 mbar for 1 hour. 1.8 g of TMP were added and the mixture was cooled while stirring. 48.4 g Desmodur^{®} I and 36.6 g Desmodur^{®} H were added at 60 °C and the mixture was stirred at 115 °C until the isocyanate content reached 5.9 wt-%. The reaction product was then dissolved in 802 g acetone and cooled to 50 °C. 3.1 g HEEDA and 7.4 g AAS solution in 48.3 g water were added and the mixture was stirred at 270 rpm for 30 minutes. 15.0 g of IPDA solution in 86.4 g of water were added and the mixture was stirred at 270 rpm for 10 minutes. Another 172 g of water were added to disperse the mixture. The acetone was then removed by distillation waterborne polyurethane dispersion with a solid content of 53 wt.-%.

### Example 7

108.2 g of Velvetol H 2000, 37.7 g of Velvetol H 1000, 161.2 g of Desmophen C 2202 and 10.8 g of Polyester LB 25 were mixed and dehydrated at 110 °C and 100 mbar for 1 hour. 5.4 g of DMPA were then added and the mixture was cooled while stirring. 36.6 g Desmodur^{®} H and 48.4 g of Desmodur^{®} I were added at 60 °C and the mixture was stirred at 115 °C until the isocyanate content reached 4.6 wt-%. The product was then dissolved in 802 g acetone and cooled to 50 °C. 3.6 g of TEA were added and the mixture was stirred for 10 minutes at 170 rpm. 3.1 g of HEEDA and 18.7 g of IPDA in 136 g of water were added and the mixture was stirred at 270 rpm for 30 minutes. Another 208 g of water were added to disperse the mixture. The acetone was then removed by distillation to obtain waterborne polyurethane dispersion with a solid content of 54 wt.-%.

### Example 8

108.2 g of Velvetol H 2000, 37.7 g of Velvetol H 1000, 161.2 g of Desmophen C 2202 and 10.8 g of Polyester LB 25 were mixed and dehydrated at 110 °C and 100 mbar for 1 hour. 1.8 g of TMP were added and the mixture was cooled while stirring. 36.6 g Desmodur^{®} H and 48.4 g Desmodur^{®} I were added at 60 °C. The mixture was stirred at 115 °C until the isocyanate content reached 5.0 wt-%. The reaction product was dissolved in 802 g acetone and cooled to 50 °C. 3.1 g HEEDA and 7.4 g AAS solution in 48.3 g water were added and the mixture was stirred at 270 rpm for 30 minutes. 17.2 g of IPDA solution in 86.4 g of water were added and the mixture was stirred at 270 rpm for 10 minutes. Another 211 g of water were added to disperse the mixture. The acetone was then removed by distillation to obtain waterborne polyurethane dispersion with a solid content of 54 wt.-%.

### Comparative example 1

32.0 g of Velvetol H 2000, 32.0 g of Velvetol H 1000, 153.6 g of Desmophen C 2202 and 9.0 g of Polyester LB 25 were mixed and dehydrated at 110 °C and 100 mbar for 1 hour.0.04 g of TMP were then added and the mixture was cooled while stirring. 64.4 g Desmodur^{®} I were added at 60 °C. The resulting mixture was stirred at 115 °C until the isocyanate content reached 4.7 wt-%. the reaction product was then dissolved in 803 g acetone and cooled to 50 °C. 4.7 g HEEDA and 6.6 g AAS solution in 48.3g water were added and the mixture was stirred at 270 rpm for 30 minutes. 7.7 g of IPDA solution in 44 g of water were added and the mixture was stirred at 270 rpm for 10 minutes. Another 146 g of water were added to disperse the mixture. The acetone was then removed by distillation to obtain waterborne polyurethane dispersion with a solid content of 55 wt.-%.

### Comparative example 2

269.4 g of Velvetol H 2000, 37.7 g of Velvetol H 1000 and 10.8 g of Polyester LB 25 were mixed and dehydrated at 110 °C and 100 mbar for 1 hour. 1.8 g of TMP were then added and the mixture was cooled while stirring. 36.6 g Desmodur^{®} H and 48.4 g Desmodur^{®} I were added at 60 °C. The mixture was stirred at 115 °C until the isocyanate content reached 5.0 wt-%. The reaction product was then dissolved in 802 g acetone and cooled to 50 °C. 3.1 g HEEDA and 7.4 g AAS solution in 48.3 g water were added and the mixture was stirred at 270 rpm for 30 minutes. 17.2 g of IPDA solution in 86.4 g of water were added and the mixture was stirred at 270 rpm for 10 minutes. Another 211 g of water were added to disperse the mixture. The acetone was then removed by distillation obtain waterborne polyurethane dispersion with a solid content of 54 wt.-%.

### Comparative example 3

108.2 g of pTHF2000, 37.7 g of pTHF1000, 161.2 g of Desmophen C 2202 and 10.8 g of Polyether LB 25 were mixed and dehydrated at 110 °C and 100 mbar for 1 hour. 1.8 g of BDO were added and the mixture was cooled while stirring. 48.4 g Desmodur^{®} I and 36.6 g Desmodur^{®} H were added at 60 °C. The mixture was stirred at 115 °C until the isocyanate content reached 5.0 wt-%. The reaction product was then dissolved in 803 g acetone and cooled to 50 °C. 3.1 g HEEDA and 7.4 g AAS solution in 48.3 g were added water and the mixture was stirred at 270 rpm for 30 minutes. 17.2 g of IPDA solution in 86.4 g of water were added and the mixture was stirred at 270 rpm for 10 minutes. Another 211 g of water to disperse the mixture. The acetone was then removed by distillation to obtain waterborne polyurethane dispersion with a solid content of 54 wt.-%.

### Comparative example 4

108.2 g of Velvetol H 2000, 37.7 g of Velvetol H 1000, 161.2 g of Desmophen C 2202 and 10.8 g of Polyether LB 25 were mixed and dehydrated at 110 °C and 100 mbar for 1 hour. 1.8 g of TMP were added and the mixture was cooled while stirring. 109.1 g Desmodur^{®} VP PU 1806 were added at 60 °C. The mixture was stirred at 90 °C until the isocyanate content reached 4.7 wt-%. The reaction product was then dissolved in 803 g acetone and cooled to 50 °C. 3.1 g HEEDA and 7.4 g AAS solution in 48.3 g water were added and the mixture was stirred at 270 rpm for 30 minutes. The polymer gelled during stirring. Therefore no waterborne polyurethane dispersion obtained.

### Comparative example 5 (corresponding to example 4 of CN101495530)

135.4 g of Velvetol H 2000 and 222.9 g of Desmophen C 1200 were mixed and dehydrated at 110 °C and 100 mbar for 1 hour. 2.9 g of TMP, 10.6 g of BDO and 12.8 g of DMPA were then added and the mixture was cooled while stirring. 135 g TMXDI were added at 60 °C. The mixture was stirred at 100 °C until the isocyanate content reached 2.1 wt-%. The reaction product was then dissolved in 900 g acetone and cooled to 50 °C. 6.3 g of DMEA were added and the mixture was stirred at 170 rpm for 10 minutes. 16.7 g DEA in 94.6 g water were added and the mixture was stirred at 270 rpm for 30 minutes. Another 435 g of water were added to disperse the mixture. The acetone was then removed by distillation to obtain a waterborne polyurethane dispersion with a solid content of 50 wt.-%.

### Comparative example 6

108.2 g of pTHF2000, 37.7 g of pTHF1000 and 161.2 g of Desmophen C 2202 were mixed and dehydrated at 110 °C and 100 mbar for 1 hour. 1.8 g of TMP were added and the mixture was cooled while stirring. 48.4 g Desmodur^{®} I and 36.6g Desmodur^{®} H were added at 60 °C. The mixture was stirred at 115 °C until the isocyanate content reached 5.2 wt-%. The reaction product was dissolved in 803g acetone and cooled to 50 °C. 3.1 g HEEDA and 9.7 g AAS solution in 48.3 g water were added and the mixture was stirred at 270 rpm for 30 minutes. 17.2 g of IPDA solution in 86.4 g of water were added and the mixture was stirred at 270 rpm for 10 minutes. Another 211 g of water were added to disperse the mixture and The acetone was then removed by distillation to obtain waterborne polyurethane dispersion with a solid content of 54 wt.-%.

### Comparative example 7

119.0 g of Velvetol H 1000, 119.0 g of Desmophen C 2202 and 10.8 g of Polyester LB 25 were mixed and dehydrated at 110 °C and 100 mbar for 1 hour. 1.8 g of TM P were then added and the mixture was cooled while stirring. 109.93 g TMXDI at 60 °C were added. The mixture was stirred at 115 °C until the isocyanate content reached 5.8 wt-%. The reaction product was then dissolved in 802 g acetone and cooled to 50 °C. 3.1 g HEEDA and 7.4 g AAS solution in 48.3 g water were added and the mixture was stirred at 270 rpm for 30 minutes. 17.2 g of IPDA solution in 86.4 g of water were added and the mixture was stirred at 270 rpm for 10 minutes. Another 172 g of water were added to disperse the mixture. The acetone was then removed by distillation to obtain waterborne polyurethane dispersion with a solid content of 55 wt.-%. Phase separation happened overnight, no further tests were conducted.

### Comparative example 8

119.0 g of Velvetol H 1000 and 119.0g of Desmophen C 2202 were mixed and dehydrated at 110 °C and 100 mbar for 1 hour. 1.8 g of TMP were then added and the mixture was cooled while stirring. 48.4 g Desmodur^{®} I and 36.6 g Desmodur^{®} H were added at 60 °C. The mixture was stirred at 115 °C until the isocyanate content reached 6.1 wt-%. The reaction product was dissolved in 802 g acetone and cooled to 50 °C. 3.1 g HEEDA and 7.4 g AAS solution in 48.3 g water were added and the mixture was stirred at 270 rpm for 30 minutes. 17.2 g of IPDA solution in 86.4 g of water was added and the mixture was stirred at 270 rpm for 10 minutes. Another 172 g of water were added to disperse the mixture. The acetone was then removed by distillation to obtain a waterborne polyurethane dispersion with a solid content of 55 wt.-%. Phase separation happened overnight, no further test were conducted.

### Sunscreen lotion resistance testing method

Materials and tools:
Coppertone Sunscreen lotion SPF70, oven, cleaning agent, glass Petri dish.

Tested specimen:
PUD dry film coated on PP (polypropylene) plate, tested area is in round shape of 5cm diameter.

Steps:
1) A polypropylene (PP) plate was coated with the PUD (thickened with slight amount of thickener if needed) with 100 micron film maker. The film was dried at room temperature for 24 hours.
2) A circular test area was evenly coated was coated with 0.6 g sunscreen. Two parallel specimens were prepared for each sample.
3) The tested area was covered with glass Petri dish, the PP plate was put in an oven, heated at 80 °C for 24 hours then cooled down to room temperature.
4) The surface of the tested specimens was cleaned with a cleaning agent and then wiped off with water.
5) Samples were rated according to the below standard (1-4, best-worst):
   Level 1: no change
   Level 2: slight change in surface, such as gloss, color, swelling or any other acceptable changes
   Level 3: obvious change in surface, such as gloss, color, swelling or any other obvious changes
   Level 4: significant change in surface, such as gloss, color, swelling or any other significant changes

| | Wt% of Component a) | Wt% of Component b) | Wt% of Component c) | Wt% of Component d) | Wt% of Component e) |
|---|---|---|---|---|---|
| | 25-50% | 20-45% | 10-30% | 0.5-2% | 1-3% |
| E1 | 34.1% | 37.6% | 19.9% | 0.8% | 2.5% |
| CE4 | 32.2% | 35.5% | MDI 24% | 0.80% | 2.37% |
| CE6 | 34.7% | 38.4% | 20.2% | 1.13% | 0 |
| E2 | 29.2% | 42% | 21% | 0.87% | 2% |
| E3 | 46.9% | 25% | 19.0% | 1.02% | 2.5% |
| E4 | 42.0% | 30% | 18.5% | 0.92% | 2.7% |
| E5 | 37.0% | 37% | 18.0% | 0.76% | 2.3% |
| E6 | 33.0% | 33% | 23.6% | 1.00% | 3.0% |
| CE7 | 30.3% | 30.3% | TMXDI 28% | 0.9% | 2.7% |
| CE8 | 33.3% | 33.3% | 23.7% | 1.0% | 0 |
| E7 | 33.7% | 37.5% | 19.8% | 1.2% | 2.5% |
| E8 | 33.7% | 37.5% | 19.7% | 0.85% | 2.49% |
| CE1 | 20.8% | 50% | 20.9% | 1.05% | 2.92% |
| CE2 | 71.0% | 0% | 19.8% | 0.85% | 2.50% |
| CE3 | pTHF1000&pTHF2000 34.0% | 37.5% | 19.8% | 0.85% | 2.50% |
| CE5 | 25.3% | 41.6% | TMXDI | 2.4% | 0 |
| | | | 25.2% | | |

| Tested sample | Remark | Sunscreen lotion resistance rating (5-worst; 1-best) | Remark on Sunscreen lotion resistance rating |
|---|---|---|---|
| E1 | | 2 | Slight gloss decrease, very small amount residue of sunscreen lotion |
| E2 | | 2 | Slight gloss decrease, very small amount residue of sunscreen lotion |
| E3 | | 2 | Slight gloss decrease, very small amount residue of sunscreen lotion |
| E4 | | 2 | Slight gloss decrease, very small amount residue of sunscreen lotion |
| E5 | | 2 | Slight gloss decrease, very small amount residue of sunscreen lotion |
| E6 | | 2 | Slight gloss decrease, very small amount residue of sunscreen lotion |
| E7 | | 2 | Slight gloss decrease, very small amount residue of sunscreen lotion |
| E8 | | 2 | Slight gloss decrease, very small amount residue of sunscreen lotion |
| CE1 | Component a) too low content, component b) too high content | 4 | Sever residue of sunscreen lotion, unable to be removed |
| CE2 | Component a) too high content, component b) not contained | 3 | Gloss decrease, obvious residue of sunscreen lotion |
| CE3 | Component a) not polytrimethylene ether glycol | 4 | Sever residue of sunscreen lotion, unable to be removed |
| CE4 | Component c) is aromatic isocyanate | NA | NA |
| CE5 | Example in prior art, no component e) | 4 | Film became sticky, much residue of sunscreen lotion, unable to be removed |
| CE6 | No component e) | 4 | Much residue of sunscreen lotion, unable to be removed |
| CE7 | Component c) is aromatic isocyanate | NA | NA |
| CE8 | No component e) | NA | NA |

## Claims

1. Polyurethane obtained or obtainable by reacting
a) 25 to 50 wt.-% of at least one polytrimethylene ether glycol (PO3G) having a number-average molecular weight between 400 and 4,000 g/mol;
b) 20 to 25 wt.-% of at least one polycarbonate polyol or polycarbonate polyester polyol;
c) 10 to 30 wt.-% of at least one aliphatic polyisocyanate;
d) 0.5 to 2.5 wt.-% of at least one ionic or potentially ionic hydrophilizing agent; and
e) 1 to 3 wt.-% at least one monofunctional hydrophilic polyether;
wherein percentages are based on the total mass of the polyurethane.

2. The polyurethane of claim 1, wherein the aliphatic polyisocyanate is selected from the group consisting of 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diiisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), 1,3- and 1,4-bis(isocyanatomethyl)cyclohexane, bis(isocyanatomethyl)norbornane (NBDI), 4,4'-diisocyanato-3,3'-dimethyldicyclohexylmethane and oligomeric polyisocyanates comprising the aforementioned diisocyanates.

3. The polyurethane of claim 2, wherein the aliphatic polyisocyanate is an oligomeric polyisocyanate comprising of at least one of the diisocyanates selected from the group consisting of 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diiisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), 1,3- and 1,4-bis(isocyanatomethyl)cyclohexane, bis(isocyanatomethyl)norbornane (NBDI) and 4,4'-diisocyanato-3,3'-dimethyldicyclohexylmethane.

4. The polyurethane of any one of claims 1 to 3 comprising a polycarbonate polyol obtained or obtainable by reacting a first compound selected from the group consisting of alkyl carbonates and aryl carbonates with at least one second compound selected from the group consisting of 1,3-propanediol, 1,4-butanediol, 1,5-pentanediol, 3-methyl-1,5-pentanediol, 1,6-hexanediol and 2,2-dimethyl-1,3-propanediol and/or a copolymer of polycaprolactone and polycarbonate obtained or obtainable by reacting a first compound selected from the group consisting of alkyl carbonates and aryl carbonates with at least one second compound selected from the group consisting of 1,3-propanediol, 1,4-butanediol, 1,5-pentanediol, 3-methyl-1,5-pentanediol, 1,6-hexanediol and 2,2-dimethyl-1,3-propanediol.

5. The polyurethane of any one of claims 1 to 4, wherein the polytrimethylene ether glycol (PO3G) as defined by formula (I)
HO[CH₂CH₂CH₂O]ₙH (I)
Wherein n stands for an integer between 424 and 3962.

6. The polyurethane of any one of claims 1 to 5, wherein the monofunctional hydrophilic polyether is a polyoxyalkylene ether containing based on the total mass of the monofunctional hydrophilic polyether a proportion of 30% by weight to 100% by weight of units derived from ethylene oxide.

7. Aqueous polyurethane dispersion comprising a polyurethane as defined by any one of claims 1 to 6.

8. The aqueous polyurethane dispersion of claim 7, wherein the content of acrylates does not exceed 10 wt.-% of the total mass of the solid body in the aqueous polyurethane dispersion.

9. The aqueous polyurethane dispersion of claim 7 or 8 having a content of organic solvents not exceeding 1 wt.-% based on the total mass of the aqueous polyurethane dispersion.

10. Article coated with the polyurethane defined in any one of claims 1 to 6.

11. The coated article of claim 10, wherein the article is selected from the group consisting of fabric, yarn, paper, film and synthetic leather base.

12. Foam or sheet made of the polyurethane defined in any one of claims 1 to 6.

13. Method comprising the steps of
a) Mixing at least one polytrimethylene etherglycol having a number-average molecular weight between 400 and 4,000 g/mol, at least one polycarbonate polyol or polycarbonate polyester polyol, at least one aliphatic polyisocyanate, optionally at least one potentially ionic hydrophilizing agent and at least one monofunctional hydrophilic polyether;
b) Reacting the mixture obtained in method step a) to form a polyurethane;
c) Adding acetone to dissolve the polyurethane before, during or after step b), but before method steps d) and e);
d) Optionally adjusting the pH of the mixture so that the potentially ionic hydrophilizing agent is converted into its ionic form;
e) Reacting the polyurethane obtained in method step b), polyurethane solution obtained in method step c) or neutralized polyurethane obtained in method step d) with amine functional small molecules (molecular weight between 60 and 400 g/mol) to form a polyurethane-urea; the said amine functional small molecules further contains an anionic compound, preferred an amino functional sulphonate or carboxylate; the said amino functional small molecules can be dissolved in acetone or water before adding;
f) Adding water to the mixture obtained in method step d) or adding the mixture obtained in method step d) to water; and
f) Removing the acetone by distillation so that an aqueous polyurethane dispersion is obtained.
